# EUROPEAN PATENT APPLICATION

(11) **EP 1 728 708 A1**
(43) Date of publication of application: **06.12.2006**
(21) Application number: 06075826.5
(22) Date of filing: 31.03.2006
(51) Int. Cl.: B62D 31/04, B62D 47/02

(54) **Open air elevated deck bus**

(30) Priority: 03.06.2005 US 687528 P; 17.11.2005 US 281803
(71) Applicant: Romano, Ronald J., Manalapan, New Jersey 07726 (US)
(72) Inventor: Romano, Ronald J., Manalapan, New Jersey 07726 (US)
(74) Representative: McKeown, Yvonne Mary

(57) **Abstract**

A sightseeing bus (100) is provided. The bus includes a chassis (120), a single elevated observation deck (140), a plurality of seats (150), a stairwell (70) holding a stairway (72), and a driver's compartment (132). The observation deck is elevated above the chassis with a portion of the elevated deck disposed above the driver's compartment. The plurality of seats are arranged upon the observation deck. The stairway has its lower end disposed at a level at or below the chassis, and the upper end thereof disposed at a level of the observation deck. A method for conducting sightseeing services utilizing the sightseeing bus is also provided.

## Description

### STATEMENT OF RELATED APPLICATIONS

The present application claims priority to Provisional Patent Application Serial No. 80/687,528 filed June 3, 2005. (Confirmation No. 2861.) That application is entitled "Open Air Elevated Deck Bus." The application is incorporated herein by reference in its entirety.

### BACKGROUND OF THE INVENTION

### Field of the Invention

The present invention relates to a tour vehicle. More particularly, the invention relates to a commercial transport vehicle configured to permit a plurality of passengers view an area from an elevated position.

### Description of the Related Art

Multi-passenger vehicles are known. In addition, multi-passenger commercial vehicles such as buses are known. Still further, multi-passenger tour vehicles are known and have been the subject of patents within the United States.

In 1914, U.S. Patent 1,102,602 was issued. This patent discloses a vehicle having an enclosed lower deck and an open upper deck. A stairway provides a means of accessing the upper deck from within the lower deck. Thus, a "double deck" bus was provided. Additional patents covering configurations for double deck buses have since been issued. Examples include U.S. Patent 1,468,710 issued in 1923; U.S. Patent 1,905,842 issued in 1932; U.S. Patent 2,563,917 issued in 1944; and U.S. Patent No. 3,971,455 issued in 1975. However, these double deck buses of the prior art limit the sightseeing ability of persons on the lower deck because of the presence of the upper deck and the relative lower position of the lower deck.

Recently, U.S. Patent 6,336,676 issued in 2002. This patent discloses a double deck, dual use bus having a passenger compartment disposed in front of a container for carrying freight. A framework divides the passenger compartment from the freight compartment. In this arrangement, sightseeing opportunities to the passengers in the lower deck are restricted by both the upper deck above and the freight container in the rear.

U.S. Patent 5,967,583 issued in 1999, and teaches a multi-level recreational vehicle. The vehicle has living spaces on at least two levels and an open air deck on the top. Use of the open air portion of the multi-level recreational vehicle is limited to times when the recreational vehicle is stationary, thus limiting the sightseeing opportunities to the occupants to a specific situation.

Therefore, a need exists for a single level tour bus having an elevated deck whereby substantially all passengers may view sights from above a transportation surface. A need also exists for an open air deck bus having a single elevated deck in order to provide equal sightseeing opportunities to all passengers on the bus while the bus is operated on a transportation surface. Certain embodiments of the invention described below and at least some of the corresponding claims will meet these needs.

### SUMMARY OF THE INVENTION

A multi-passenger bus is first provided. In one aspect, the bus includes a chassis, a driver's compartment at a forward portion of the chassis; an observation deck elevated above the chassis; a plurality of seats arranged on the observation deck; a stairwell; and a stairway. The stairway has a lower end disposed at a level below the chassis, and an upper end disposed at a level of the observation deck.

Preferably, the observation deck extends over the driver's compartment. Preferably, the seats are arranged on the deck in columns and rows for seating tourists. Preferably, the enclosure below the observation deck contains no seats for tour-passengers.

### BRIEF DESCRIPTION OF THE DRAWINGS

So that the manner in which the above recited features of the present invention can be better understood, certain drawings are appended hereto. It is to be noted, however, that the appended drawings illustrate only selected embodiments of the inventions and are therefore not to be considered limiting of scope, for the inventions may admit to other equally effective embodiments and applications.

Figure 1 is a right side perspective view of the single elevated deck bus of the present invention, in one embodiment. The bus is parked on a transportation surface.

Figure 2 is a right side plan view of the single elevated deck bus of the Figure 1. Portions of the right side wall of the bus are broken away to expose internal details, including portions of an anterior support structure.

Figure 3 presents a left front perspective view of the bus of Figure 1. Portions of the left side wall of the bus are broken away to expose internal details, including a posterior support structure.

Figure 4 is a perspective view of a portion of the enclosure within the bus of Figure 1. Anterior and posterior support structures are seen, along with a connecting support structure therebetween and a central support structure.

Figure 5 is a perspective view of the bus of Figure 1, taken from a rear of the bus, and on a top surface or "observational deck." A portion of a stairwell is seen. Also, a plurality of seats are shown from the rear.

Figure 6 is another perspective view of the bus of Figure 1 taken from the observational deck. In this view, the seats at the front portion of the bus are more clearly seen, along with a front cap of the bus.

Figure 7 provides a perspective view of the bus of Figure 1, taken from the front of the bus and on the observational deck. The plurality of seats are again shown, but from a front view.

### DETAILED DESCRIPTION

### Definitions

As used herein, the terms "bus" or "tour bus" refer to any vehicle capable of transporting a plurality of passengers. Non-limiting examples include recreational vehicles, buses and trucks. The tour bus will have tires for mobility, but may be powered through any energy source including but not limited to electricity, solar rays, ethanol, hydrocarbon fuel or any hybrid fuel source.

The term "chassis" refers to the frame, suspension system, engine (or other power mechanism), and drive train of a vehicle.

The term "ticket" means any form of payment or proof of payment of a fare, such as a paper ticket, a token, a stamp, a magnetic credit (or debit) card or other form.

The term "money" refers to any form of currency or tokens, or a transaction using a credit card, debit card, charge card or pre-paid card.

### Description of Specific Embodiments

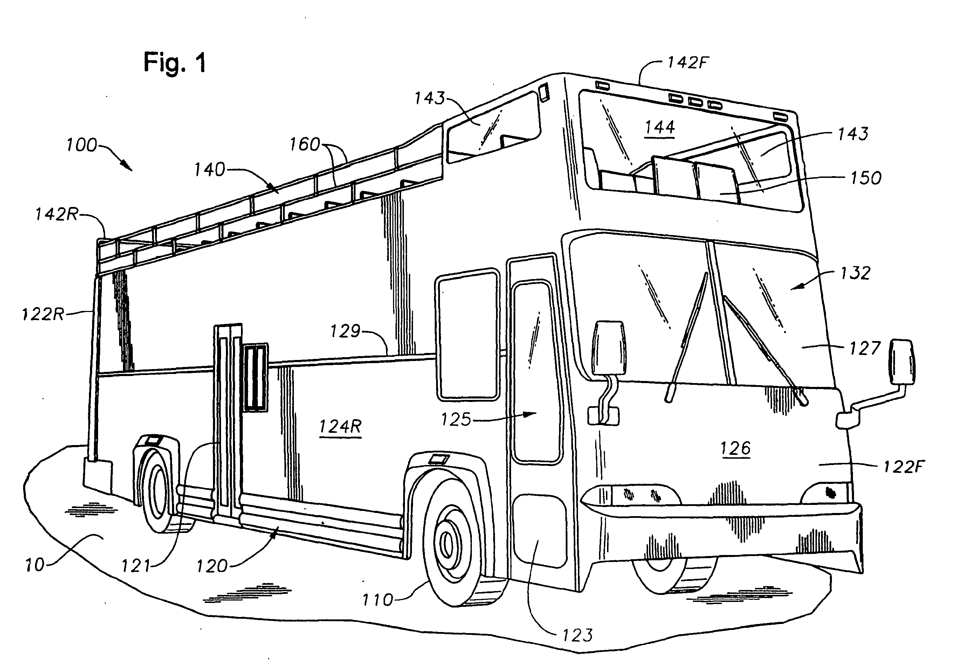

**Figure 1** presents a side view of a tour bus **100** in accordance with the present invention, in one embodiment. The tour bus **100** is parked on a transportation surface **10.** In this view, the illustrative transportation surface **10** is a parking lot. The tour bus **100** is designed to transport a plurality of passengers over a street or highway or other such transportation surface **10,** and from an elevated position. Tires **110** are shown for engaging the transportation surface **10.**

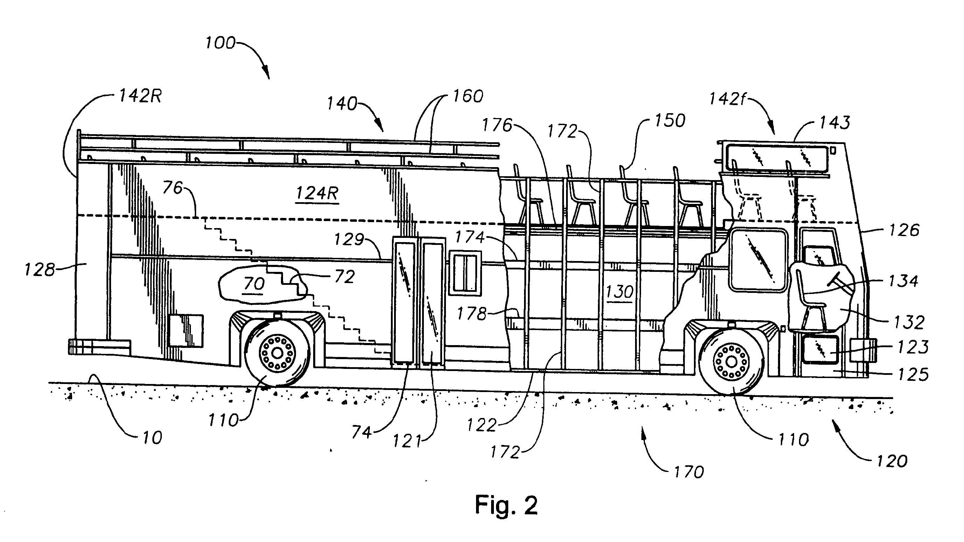

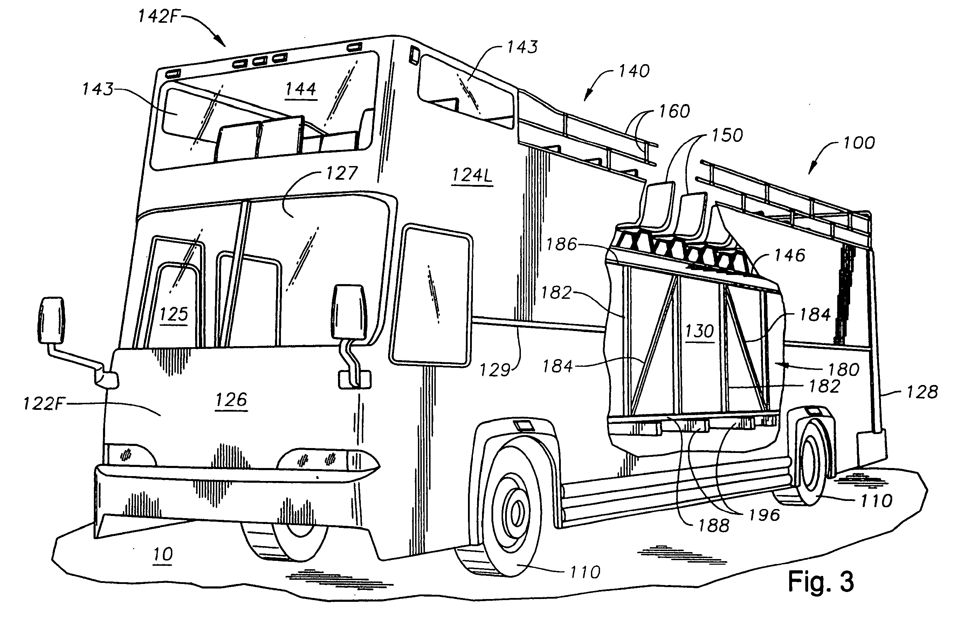

Certain features of the tour bus **100** are seen in **Figure 1.** First, a right side wall **124R** is provided. It is understood that an opposing left side wall **124L** is also provided, which is shown in **Figure 3.** Together, the right **124R** and left **124L** side walls form a lower enclosure **130** (seen in the cutaway views of **Figures 2** and **3).**

The tour bus **100** also has a pair of side doors **121, 123.** Side door **121** provides ingress and egress for passengers, while side door **123** provides access to a driver's compartment **132** by a driver.

The tour bus **100** also has a front end **122F** and a rear end **122R.** A front end cap **126** and a front windshield **127** are provided at the front end **122F** to enclose the driver's compartment **132.** Other features are provided at the front **122F** of the bus **100** but are not marked, such as rear view mirrors, a front bumper and a side driver's window. The driver's station **132** preferably includes a step lowered about ten inches and positioned to the right of a driver's seat **134** to allow sufficient room for the driver to enter and exit. A small platform behind the driver's station **132** is also constructed and raised about five or six inches from the floor in the driver's compartment **132.**

The tour bus **100** also includes a chassis **120.** As noted, the chassis refers to the base frame, suspension system, engine, and drive train of a vehicle. The base frame is shown at **122;** however, the other listed parts are not shown. The base frame **122** may be fabricated from any material including but not limited to steel, aluminum (or aluminum alloy), woven graphite, molded plastic composites or other materials. The base frame **122** may include lightening holes (not shown) cut into it.

The chassis **120** supports the side walls **124R, 124L** of the vehicle **100** as well as the front end cap **126,** the front bumper and a rear end cap (shown at **128** in **Figure 2).** The chassis **120** supports additional parts of the bus **100,** as will be described further below.

The tour bus **100** also includes a single observation deck **140.** The observation deck **140** is well elevated to afford paying tourists or other passengers a good view of surrounding items of historical or environmental interest. The observation deck **140** has a front end **142F** and a rear end **142R.** The front end **142F** defines a front end cap having a wind screen **144.** In the arrangement of **Figure 1,** the wind screen **144** is a plexi-glass windshield. However, other materials such as a true glass or a poly-mesh may be utilized.

It is noted that the front end cap **142F** wraps around the left **124L** and right **124R** sides of the bus **100** to include side wind screens **143.** In the illustrated embodiment, the side windscreens **143** extend a distance substantially equal to the length of the driver's compartment **132.** However, the windscreens **143** may alternatively extend from the front edge **142F** to the rear end cap **128** of the bus **100.**

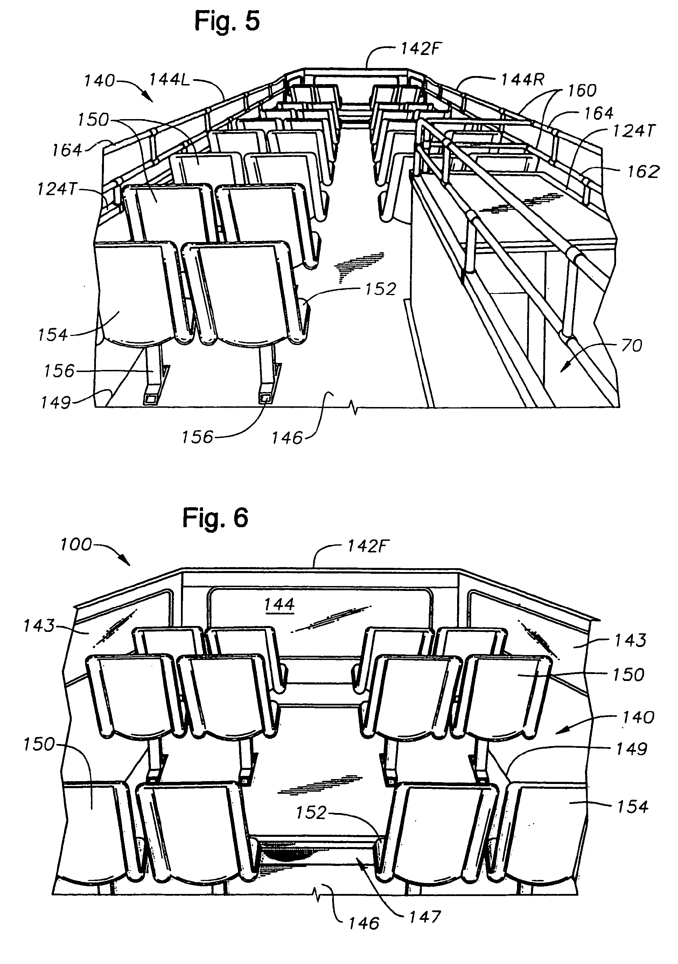

The observation deck **140** supports a plurality of seats **150.** Only a few seats **150** are visible in the perspective view of **Figure 1.** However, the seats **150** are more clearly seen in **Figures 5-7,** and are described in greater detail below in connection with those **Figures.**

Finally, it is noted from **Figure 1** that the observation deck **140** includes side rails **160.** The side rails **160** are placed between the side wind screens **143** and the rear **142R** of the observation deck **140.** The side rails **160** serve as a safety aid for passengers on the observation deck **140.**

Referring now to **Figures 2** and **3,** these figures provide cutaway views of the tour bus **100** of **Figure 1. Figure 2** is a plan view of the single elevated deck bus **100** of the **Figure 1,** taken from the right side **124R** of the bus **100. Figure 3** presents a left front perspective view of the bus **100** of **Figure 1.** Portions of the side walls **124R, 124L** of the bus **100** are broken away in the respective views to expose internal details described below. In **Figure 2,** the right side wall **124R** is cut away to expose the anterior support structure **170,** while in **Figure 3** the left side wall **124L** is cut away to expose the posterior support structure **180.** These two support structures **170, 180** support the decking **140.**

Certain features of the tour bus **100** from **Figure 1** are again visible in **Figure 2.** These include tires **110,** the passenger door **121,** the driver's door **123,** the driver's compartment 132, and the observation deck **140.** In addition, both the front end cap **126** and the rear end cap **128** are shown. In addition, the right side wall **124R** itself is seen. It is noted here that the right side wall **124R** is preferably formed of an aluminum-based siding material which is glued to the anterior support structure **170** of the bus **100.** The siding is preferably **Alucabond**^{**®**} sheeting available in 35 foot long sheets up to 6 feet in width, thus allowing each side wall **124R, 124L** to be covered with only two sheets of siding, the separate sheets joined together at the juncture thereof with a trim molding **129.**

Certain features of the tour bus **100** from **Figure 1** are also visible in **Figure 3.** These include tires **110,** the front end cap **126,** the driver's windshield **127,** the passenger's front wind screen **144,** the side wind screens **143,** the observation deck **140,** and railing **160.** In addition, the plurality of seats **150** are seen along the observation deck **140.**

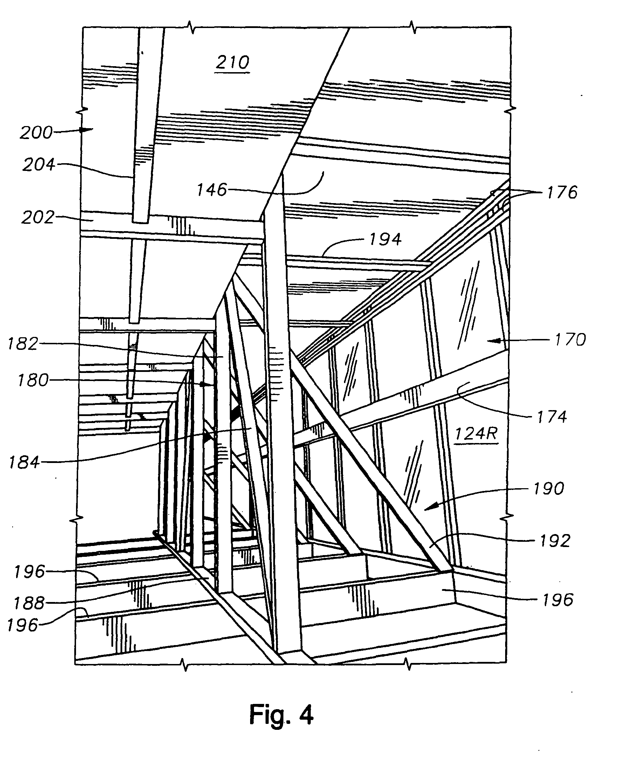

Referring again to **Figure 2,** a portion of the anterior support structure **170** is exposed. The anterior support structure **170** includes upright beams **172** and a transverse horizontal beam **174.** In addition, upper **176** and lower **178** beams are included. These beams **172, 174, 176, 178** may be joined by welded brackets or secured together by connector plates (not shown) or by suitable connectors such as nuts and bolts. The anterior support structure **170** is disposed along a longitudinal axis of the bus **100** along both the left **124L** and right **124R** side walls, separately. In one embodiment, lower portions of the upright beams **172** rest on the base frame **122** of the chassis **120.** In an alternate aspect, lower horizontal beams **178** are connected to and supported by lower connecting beams **196** (seen in Figure 4) using thick rubber bushings (not shown). A bolt (nor shown) is passed through each connecting beam **196,** inserted rubber bushing and a corresponding mounting bracket. Nuts (also not shown) are then applied to the threaded open ends (not shown) of each bolt and tightened against the underside of the mounting brackets, thus tying the lower beams **196** to the chassis **120.**

Outer faces of the beams **172, 174, 176, 178** of the anterior support structure **170** are connected to and support the siding that forms the side walls **124R, 124L.** Typically, an adhesive is used for the connection. The side walls **124R, 124L** extend above the flooring (seen at **146** in **Figure 5)** of the observational deck **140.**

Referring next to **Figure 3,** a portion of the posterior support structure **180** is seen. The posterior support structure **180** includes upright beams **182** connected in some instances by angle beams **184.** Transverse horizontal upper **186** and lower **188** horizontal beams are also included. The beams **182, 184, 186, 188** of the posterior support structure **180** may likewise be joined by welded brackets or secured together by connector plates or other suitable connector (not shown). As with the anterior support structure **170,** the posterior support structure **180** is disposed along a longitudinal axis of the bus **100,** but just interior to the anterior support structure **170.**

The anterior **170** and posterior **180** support structures may be joined together by an intermediate connecting structure **190** for additional support. **Figure 4** provides an additional view of the anterior **170** and posterior **180** support structures, along with the intermediate connecting structure **190. Figure 4** is a perspective view from within the enclosure **130** of the bus **100** of **Figure 1,** in one embodiment. The view is looking forward towards the front end **122F** of the bus **100.**

The connecting structure **190** includes lateral beams **192.** It may also include upper **194** and lower **196** horizontal beams. The beams **192, 194, 196** of the connecting structure **190** serve to stabilize the anterior **170** and posterior **180** support structures within the bus **100.** In addition, the upper beams **194** of the connecting structure **190** support the decking **146** of the deck **140** on the left and right sides. Portions of the posterior **180** and connecting **190** structures are cut out along the right side wall **124R** to create space for the passenger door **121** and for a stairwell **70** of the bus **100,** described below. The cutout on the right side **124R** of the bus **100** is preferably disposed ahead of the rear wheels.

Also of interest from **Figure 4,** the upper beams **194** of the connecting structure **190** are shown immediately under the decking **146** of the deck **140** along the right side. The right side wall **124R** is seen secured to the anterior support structure **170.**

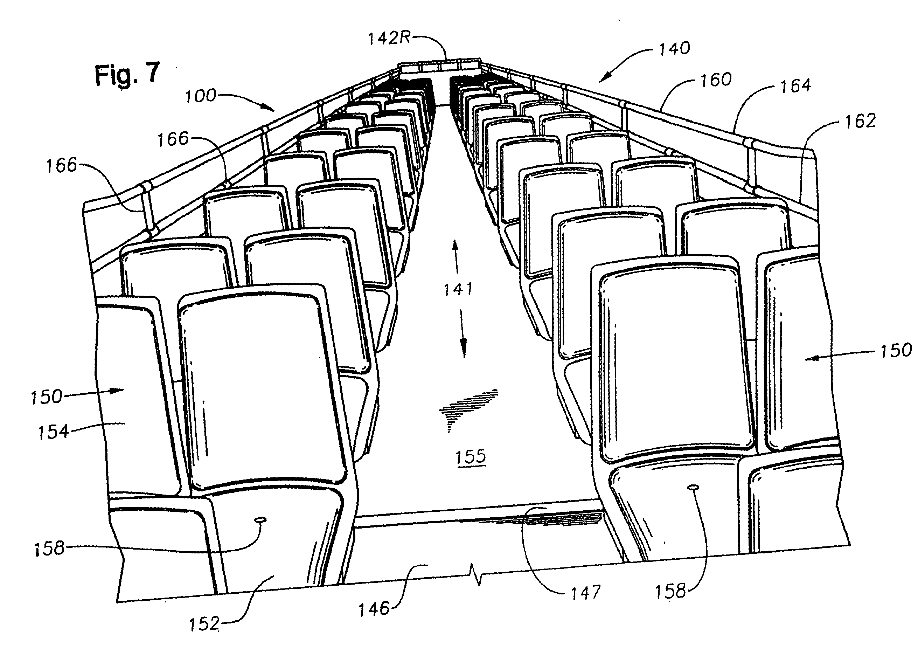

A central support structure **200** is also seen in **Figure 4.** The central support structure **200** includes transverse **202** and longitudinal **204** beams. These beams **202, 204** support a central portion of the decking **146** from within the enclosure **130.** In the embodiment of **Figure 1,** the central portion of the decking serves as a walkway, indicated as **155** in **Figure 7.** Underneath the decking, a drop-down channel **210** may be provided to house duct work, electrical wiring, or other materials. The drop-down channel **210** is seen in **Figure 4,** but not shown in the cut-a-way view of **Figure 3.** The transverse beams **202** are preferably joined to the upright beams **182** of the posterior support structure **180.**

The central support structure **200** is disposed along the longitudinal axis of the bus **100.** Preferably, the central support structure **200** is supported at a height of approximately 8 feet above the transportation surface **10.** The central support structure **200** provides central support to the observation deck **140.** In contrast, the upper beam **176** of the anterior support structure **170** extends upward to a height of about 7 feet, 10 inches above the transportation surface **10.** This is slightly lower than the central support **200** for the flooring **146.** In this way, the flooring **146** is crowned to facilitate runoff of water towards the side walls **124L, 124R** of the bus **100.**

Referring back to **Figure 2,** additional features of the bus **100** are seen from cut-away portions in the right side wall **124R.** The lower enclosure area **130** is visible. The lower enclosure area **130** is generally defined by the side walls **124R, 124L,** the base frame **122** and the flooring **146** of the deck **140.** The forward portion **122F** of the lower enclosure area **130** includes the driver's compartment **132.** The driver's seat **134** is seen within the driver's compartment **132** for receiving a driver or chauffeur. The driver's compartment **132** will also include operating apparatus such as the steering wheel, braking and accelerating pedals, etc. (not shown). Preferably, the driver's compartment **132** is placed as low as possible to operating surface **10** to allow the driver to readily see out of the front **122F** of the tour bus **100.**

The lower enclosure area **130** also includes a stairwell **70.** In the illustrated embodiment, the stairwell **70** is positioned towards the rear **122R** of the bus **100.** The stairwell **70** is dimensioned to receive a stairway **72** comprising steps. A bottom step **74** and an upper step **76** are seen. The lower step **74** is secured to the chassis **120,** while the upper end **76** is secured to and terminates at the flooring **146** of the elevated deck **140.** The stairwell **70** defines an opening within the flooring **46** of the elevated deck **140.** In one embodiment, there are a total of eight, ten-inch steps and one, six-inch step provided. In one aspect, the bottom step **74** extends below the chassis **120.**

**Figure 5** is a perspective view of the bus **100** of **Figure 1,** taken from a rear of the bus **100,** and on the observational deck **140.** The view is looking forward towards the front end **142f** of the deck **140.** The stairwell **70** is seen extending through the decking **146** of the deck **140.** The observation deck **140** is elevated above the chassis **120.** The observation deck **140** has a front portion **142F** and a rear portion (seen at **142R** in **FIG. 7).** The front portion **142F** ideally extends above the driver's compartment **132.** The observation deck **140** also has a left side edge **144L** and a right side edge **144R.**

**Figure 6** provides another perspective view of the bus **100** of **Figure 5,** taken again from the observational deck **140.** Here, the view is taken in closer proximity to the front **142F** of the deck **140.** The passenger's front **144** and side **143** windscreens are seen at the front **142F** of the deck **140** is seen. Preferably, the windscreens **144, 143** are integral to the front end cap **126** of the bus **100.**

It is observed from **Figures 5** and **6** that the flooring **146** at the front **142F** of the bus **100** is raised relative to the flooring **146** of the rest of the deck **140.** This is done to accommodate head room and operating room of the driver within the driver's compartment **132.** A step **147** is shown leading to the front **142F** of the bus **100.**

**Figure 7** provides a perspective view of the bus **100** of **Figure 1,** taken again on the observational deck **140.** As compared to **Figures 5** and **6,** this view is seen from the front **142F** of the bus **100** looking towards the rear **142R.**

In each of **Figures 5, 6** and **7,** the plurality of seats **150** are seen. Each seat **150** has a seating portion **152** and a back **154.** Further, each seat **150** has a base **156.** Preferably, the seats **150** are fabricated from a waterproof material such as a molded thermoplastic material. A cushioning material is also preferably utilized within or on the thermoplastic material. Each seat **150** may include a drain hole **158** disposed through the seating portion **152** to channel any moisture from the seating portion **152** to the flooring **146** surface forming the elevated deck **140.** One source of suitable seats **150** is the Friedman manufacturing company out of Indiana.

It should be added that the seats **150** may be individual chairs, or they may be bench- or pew-type seats. The seats **150** may be arranged in rows and columns, or they may be staggered. Preferably, the seats **150** are arranged in two columns divided by a walkway **155** as shown best in **Figure 7.** The walkway **155** may be centrally located, disposed closer to one side of the elevated observation deck **140,** or along one side of the deck **140.**

As noted, the flooring **146** for the elevated observation deck **140** is preferably crowned by elevating a longitudinally central portion **141.** The relief provided by the crowned deck **140** allows water to run to opposing side edges **149** of the decking **140.** Preferably, drain holes **145** are disposed through the side edges **149** to receive water. The drain holes (not shown) are in fluid communication with drain pipes (also not shown) along the side walls **124R, 124L** to direct runoff water to the surface **10** upon which the bus **100** is operated.

The flooring **146** for the observation deck **140** is fabricated from a sturdy and water resistant material. In one embodiment, the flooring **140** defines a heavy plywood treated with a waterproofing epoxy cement. The flooring **146** is further overlaid with rubberized decking material. The rubberized decking material may be of the paint-on or spray-on type, or may even be a separate, preformed layer that is unrolled over the treated plywood. One source for rubberized flooring material is the Congoleum Corporation of Mercerville, New Jersey, commonly sold under the trade name Congoleum®. Preferably, the flooring **146** includes raised portions and depressed areas to provide a safe and comfortable walking surface. The central portion **141** of the flooring **146** is supported by the central support structure **200,** while the opposing edges **149** of the flooring **146** are supported by the anterior **170** and posterior **180** support structures, and the upper beam **194** of the connecting structure **190.** Together, support structures **170, 180, 190** and **200** form one embodiment for a structural support system for supporting the observational deck **140.**

It is preferred that the flooring **146** be positioned about 7.5 feet to 10 feet above the transportation surface **10.** This height is sufficiently elevated to enable passengers to view surrounding sights during transportation, but low enough to limit moment of the vehicle **100** and avoiding tipping during turns. Preferably, the flooring **146** is eight feet above the transportation surface **10,** except for the forward portion **142F** above the driver's compartment **132,** which is preferably 8.5 feet above the transportation surface **10.**

Referring again to **Figures 5** and **7,** these views from the observation deck **140** best show the side rails **160** of the bus **100.** In the demonstrated arrangement, the side rails **160** include separate lower **162** and upper **164** rails, supported by vertical bars **166.** Some of the vertical bars **166** are secured to the left **124L** and right **124R** side walls along respective top **124T** surfaces. The lower **162** and upper **164** rails serve as safety railing. Preferably, the upper bar **164** is disposed about six inches above lower bar **162,** the space therebetween being sufficiently small to prevent a small child from passing between bars **162, 164.**

The above described drawings disclose a tour bus **100** having a single, elevated deck **140.** The height of the deck **140** permits all passengers to view surrounding sights from a common seating area. At the same time, the height of the deck **140** is not so high as to create a danger of causing the bus **100** to tip when the driver turns a corner at a reasonable, sight-seeing speed such as 10 to 40 miles per hour.

It is noted that the bus **100** of **Figure 1** does not include a roof. However, an additional novel feature of the bus **100** would include a removable roof.

A method for sight-seeing is also provided herein. The method first involves the provision of a bus having a single, elevated observation deck, such as the bus **100** described above. Next, tickets are sold to a plurality of passengers. Tickets may be sold at a booth or station external to the bus, or tickets may be sold through a ticket taker platform on the bus **100.** Such a platform may include one or more display cases along a recessed wall (not shown) adjacent the ticket taker platform which holds brochures advertising sight-seeing tours of the company operating or owning the bus. Where the bus **100** operates over a defined route on a regular basis disembarking and embarking passengers at defined locations, the ticket taker platform may house an automatic ticket taking device which accepts either coins, currency, credit/debit cards or tokens which permits embarking of passengers paying the proper fare. The automatic ticket taking device would likely have a stairway bar (not shown) to deny access to the observation deck to potential passengers who have not provided the proper fare for the tour.

One preferred embodiment of the sight-seeing method has passengers purchasing a multiple trip pass which is read by the automatic ticket taking device, thus allowing the ticketed passenger to periodically embark and disembark at desired locations along the tour route within a defined time period. In one aspect, the multiple trip pass is a day pass. In another embodiment, a passenger may purchase a multiple day/multiple route pass allowing the passenger to avail himself /herself with all the tours available to the company operating multiple single elevated deck busses over multiple routes.

After paying the proper fare, the passengers enter the bus **100** through a door such as passenger door **121.** From there, the passengers move through a stairwell such as stairwell **70** onto a common elevated observation deck, such as deck **140.** The observation deck **140** is elevated to a height of at least 6 feet above the transportation surface **10,** and preferably at least 7.5 feet.

The passengers seat themselves in respective seats, such as seats **150.** The bus **100** is operated by a driver, who drives the passengers along a selected transportation surface **10** to provide sight-seeing services. It is noted that either a ticket taker or the driver may also function as a tour guide after embarking all passengers at a particular stop by describing sites to the passengers as the bus approaches the sites over a loud speaker system.

The bus **100** may optionally house an elevator (not shown) to raise physically handicapped persons to the single elevated observation deck **140.** For instance, the ticket taker may step aside while boarding a physically handicapped person, operate the elevator to raise the handicapped person to the observation deck **140,** lower the elevator after the handicapped person has disembarked, and resume the function as ticket taker.

While the present inventions have been described with reference to the above described preferred embodiments, it should be noted that various other embodiments and modifications may be made without departing from the spirit of the invention. Therefore, the embodiments described herein and the drawings appended hereto are merely illustrative of the features of the invention and should not be construed to be the only variants thereof nor limited thereto.

## Claims

1. A multi-passenger tour bus for operating on a transportation surface, comprising:
a chassis;
a single observation deck elevated above the chassis having a height of at least six feet above the transportation surface;
a plurality of seats arranged on the observation deck;
a structural support system for supporting the observation deck; and
a stairway having a lower end proximate the chassis, and an upper end terminating proximate a level of the observation deck.

2. The tour bus of claim 1, further comprising a drive's compartment at a forward portion of the chassis, and wherein the observation deck includes a forward portion extending over the driver's compartment.

3. The tour bus of claim 1, further comprising:
left and right side walls; and
a lower enclosure defined in part by the left and right side walls and a flooring of the observation deck.

4. The tour bus of claim 3, further comprising:
a stairwell within the enclosure for receiving the stairway.

5. The tour bus of claim 1, wherein the observation deck further comprises:
a flooring for supporting the plurality of seats, the flooring being crowned along a longitudinal axis to permit runoff;
drain holes along opposing side edges of the flooring to receive runoff;
a front wind screen; and
an opening within the flooring for receiving the stairway.

6. The tour bus of claim 1, wherein the structural support system comprises:
a central support structure disposed along a longitudinal axis of the bus approximately central to the bus; and
left and right side support walls.

7. The tour bus of claim 6, wherein the structural support system further comprises:
an anterior support structure on opposing sides of the bus and upon which the left and right side walls, respectively, are connected;
a posterior support structure within the anterior support structure along the opposing sides of the bus; and
an intermediate connecting support structure connecting the anterior and posterior support structures.

8. The tour bus of claim 7, wherein a height of the central support structure is greater than a height of each of the left and right anterior support structures so as to provide a crown along a longitudinal axis of the observation deck.

9. A method for conducting sightseeing services, comprising the steps of:
providing a multi-passenger tour bus for operating on a transportation surface, the tour bus comprising:
a chassis,
a single observation deck elevated above the chassis having a height of at least 6 feet above the transportation surface,
a plurality of seats arranged on the observation deck,
a structural support system for supporting the observation deck, and
a stairway having a lower end supported by the chassis, and an upper end terminating proximate a level of the observation deck;
selling tickets to a plurality of passengers;
directing the plurality of passengers to the observation deck; and
operating the bus.

10. The method of claim 9, wherein the bus further comprises:
left and right side walls;
a lower enclosure defined in part by the left and right side walls and a flooring of the observation deck;
a stairwell within the enclosure for receiving the stairway;
a flooring for supporting a plurality of seats, the flooring being crowned along a longitudinal axis to permit runoff; and
an opening for receiving the stairway.
